(19) **Europäisches Patentamt / European Patent Office / Office européen des brevets**

(11) **EP 3 845 002 B1**

(12) **FASCICULE DE BREVET EUROPEEN**

(45) Date de publication et mention de la délivrance du brevet:
**26.02.2025 Bulletin 2025/09**

(21) Numéro de dépôt: **19774157.2**

(22) Date de dépôt: **30.08.2019**

(51) Classification Internationale des Brevets (IPC):
**H04W 48/16** *(2009.01)*

(52) Classification Coopérative des Brevets (CPC):
**H04W 48/16**

(86) Numéro de dépôt international:
**PCT/FR2019/052002**

(87) Numéro de publication internationale:
**WO 2020/043994 (05.03.2020 Gazette 2020/10)**

(54) **PROCÉDÉ DE RÉGLAGE DE PARAMÈTRES D'UN SOUS-ENSEMBLE VIRTUEL D'UN RÉSEAU DÉDIÉ À UN SERVICE**

VERFAHREN ZUR EINSTELLUNG VON PARAMETERN EINER VIRTUELLEN UNTERMENGE EINES NETZWERKS, DAS EINEM DIENST ZUGEORDNET IST

METHOD FOR SETTING PARAMETERS OF A VIRTUAL SUBSET OF A NETWORK DEDICATED TO A SERVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2018 FR 1857850**

(43) Date de publication de la demande:
**07.07.2021 Bulletin 2021/27**

(73) Titulaire: **Orange**
**92130 Issy-les-Moulineaux (FR)**

(72) Inventeurs:
• **GUIONNET, Chantal**
**92326 Châtillon Cedex (FR)**
• **LEFAUCHEUX, Jean-Philippe**
**92326 Châtillon Cedex (FR)**
• **BENGUIGUI, Catherine**
**92326 Châtillon Cedex (FR)**
• **JUMPERTZ, Sylvie**
**92326 Châtillon Cedex (FR)**
• **GUEGAN, Delphine**
**92326 Châtillon Cedex (FR)**

(74) Mandataire: **Plasseraud IP**
**104 Rue de Richelieu**
**CS92104**
**75080 Paris Cedex 02 (FR)**

(56) Documents cités:
**WO-A1-2017/143047     WO-A1-2017/218849**
**FR-A1- 3 052 324**

• **TALEB TARIK ET AL: "PERMIT: Network Slicing for Personalized 5G Mobile Telecommunications", IEEE COMMUNICATIONS MAGAZINE, IEEE SERVICE CENTER, PISCATAWAY, US, vol. 55, no. 5, 1 May 2017 (2017-05-01), pages 88 - 93, XP011649170, ISSN: 0163-6804, [retrieved on 20170511], DOI: 10.1109/MCOM.2017.1600947**
• **GSM ASSOCIATION: "AN INTRODUCTION TO NETWORK SLICING An Introduction to Network Slicing", 17 November 2017 (2017-11-17), pages 1 - 20, XP055519364, Retrieved from the Internet <URL:https://www.gsma.com/futurenetworks/wp-content/uploads/2017/11/GSMA-An-Introduction-to-Network-Slicing.pdf> [retrieved on 20181026]**

EP 3 845 002 B1

**Description**

L'invention concerne le domaine des réseaux de télécommunication.

L'architecture des réseaux de télécommunication mobiles a jusqu'ici été standardisée. C'est en particulier le cas des réseaux mobiles dits « 2G », « 3G » et « 4G », dont les différentes architectures de réseau reposent traditionnellement sur des équipements bien spécifiques et dédiés à certaines fonctionnalités précises, que ce soit au niveau du réseau d'accès ou du cœur de réseau.

Le manque de flexibilité et d'évolutivité inhérent à ce type d'architecture conventionnelle a amené à envisager l'adoption d'architectures plus flexibles pour la prochaine génération de réseaux mobiles, dite « 5G », afin de pouvoir répondre rapidement à des demandes extrêmement diverses en termes de trafic ou de qualité de service.

Parmi les solutions envisagées, une des solutions repose sur une technique de découpage virtuel par tranches du réseau (« network slicing » en anglais).

Le concept de tranche de réseau est destiné à supporter des services de communication pour des services client spécifiques, des utilisateurs spécifiques ou des terminaux spécifiques en appliquant des moyens adaptés de gestion de trafic.

Une tranche du réseau est caractérisée par un ensemble de valeurs de paramètres réseaux permettant de répondre aux exigences liées aux services à fournir. Les tranches de réseau proposées par un opérateur n'ont pas toutes les mêmes valeurs de paramètres réseaux sachant que l'idée est d'adapter l'architecture et les tranches de réseau aux exigences d'usage lié à cette tranche de réseau. Une tranche du réseau permet ainsi de satisfaire la demande des utilisateurs suivant des critères fonctionnels, opérationnels et de performance différents, tels que le débit, la latence, le nombre de connexion, la couverture, le coût, etc.

A titre d'exemple, une tranche de réseau mise en œuvre liée aux services IoT (« Internet of Things » en anglais) pourra nécessiter de gérer un grand nombre de connexion de terminaux mais un débit associé à chaque terminal plutôt faible. Selon un autre exemple, un service proposé à une clientèle professionnelle nécessitera plutôt des contraintes fortes en termes de sécurité et de disponibilité. L'objectif est de proposer pour une tranche de réseau donnée les seuls paramètres indispensables pour le cas d'usage correspondant à la tranche de réseau et des valeurs de paramètres adaptées.

Toutefois, tous les paramètres d'une tranche de réseau sont liés de façon plus ou moins complexe les uns avec les autres selon des règles prédéterminées. Ainsi, si une valeur de paramètre de la tranche de réseau est modifiée, certaines valeurs d'autres paramètres sont également susceptibles d'être impactées et donc modifiés, entrainant des contraintes fonctionnels, opérationnels et de performance pour l'utilisateur de la tranche de réseau. Il est alors difficile pour l'utilisateur final de déterminer, superviser ou adapter les ressources réseaux qui lui sont nécessaires.

Des exemples et modes de réalisations de l'art antérieur sont présentés dans le document WO2017/143047 A1, le document "PERMIT:Network Slicing for Personalized 5G Mobile Telecommunications", publié en mai 2017 dans IEEE Communications Magazine, et le document GSM Association : "An Introduction to Network Slicing", 17 novembre 2017 (2017-11-17), pages 1-20.

La présente invention vise à résoudre, au moins partiellement, ces inconvénients.

En particulier, l'invention vise à permettre à un utilisateur de déterminer et de connaitre de façon simple les différents paramètres de la tranche réseau selon ses besoins, leurs valeurs, et le cas échéant, de les modifier. Cela lui permet aussi de voir les impacts de variation de chacune des valeurs de paramètres sur les autres valeurs de paramètres.

L'invention est telle que définie dans le jeu de revendications.

Grâce à ces dispositions, on obtient une assistance visuelle à la compréhension des liens entre les différents paramètres d'une tranche de réseau, permettant de choisir et de gérer de façon satisfaisante par l'utilisateur la tranche de réseau dédié au service dont il a besoin. L'utilisateur peut ainsi facilement déterminer et modifier les paramètres de la tranche de réseau au moyen d'une représentation, ou empreinte visuelle, spécifique.

Les caractéristiques et avantages de l'invention apparaîtront plus clairement à la lecture de la description, faite à titre d'exemple, et des figures s'y rapportant qui représentent :

- La figure 1 est un schéma simplifié d'un procédé de réglage de valeurs de paramètres d'un sous-ensemble virtuel d'un réseau selon l'invention ;
- La figure 2 est une représentation des paramètres d'entrée d'une tranche de réseau au moyen d'une interface graphique selon un mode de réalisation de l'invention ;
- La figure 3 est une représentation des paramètres d'une tranche de réseau au moyen de l'interface graphique de la figure 2 selon un autre mode de réalisation de l'invention ;
- La figure 4 est une représentation des paramètres d'une tranche de réseau au moyen de l'interface graphique des figures 2 et 3 selon un autre mode de réalisation de l'invention ; et
- La figure 5 est un schéma simplifié d'un terminal et d'un équipement d'accès associé au paramétrage de la tranche de réseau selon l'invention.

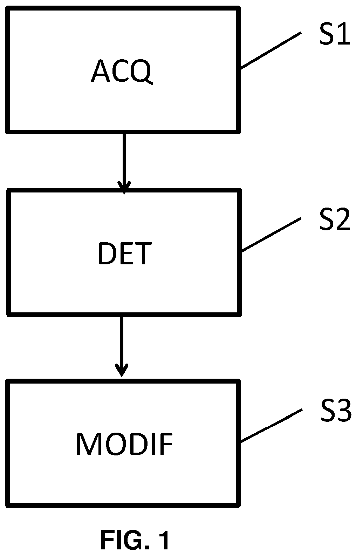

La figure 1 illustre un schéma simplifié d'un procédé de réglage de valeurs de paramètres d'un sous-ensemble virtuel d'un réseau, dit « tranche de réseau », selon l'invention.

Afin d'éviter de déployer des équipements physiques pour chaque besoin d'un client ou d'un utilisateur, un opérateur peut avantageusement utiliser des fonctions virtualisées pour mettre en œuvre une tranche de réseau, permettant de déployer une seule infrastructure physique et d'activer sur cette infrastructure physique plusieurs tranches de réseau. L'opérateur peut donc gérer et exploiter plusieurs tranches de réseau sur une infrastructure de réseau physique unique.

Une telle technique de découpage virtuel par tranches de réseau permet ainsi à l'opérateur d'un réseau de télécommunication de créer des réseaux « sur mesure », donc personnalisable par l'utilisateur, capable de fournir rapidement des solutions optimisées pour des besoins très variés avec des contraintes très diverses en termes de fonctionnalités et de performance.

Chaque tranche de réseau est adaptée aux besoins spécifiques du service de l'utilisateur. Les tranches de réseau correspondent à des services au sens large. Ainsi, une tranche de réseau comprend une pluralité de paramètres. Les paramètres permettent de définir le service fourni par la tranche de réseau. Le nombre de paramètres présentés peut en particulier varier en fonction des besoins de l'utilisateur, ou en fonction du type d'utilisateur (superviseur pour l'opérateur ou client par exemple).

Par « paramètre », on entend une caractéristique dont la valeur influe sur le service obtenu par l'utilisateur, et donc fourni par la tranche de réseau.

Selon une réalisation, un paramètre concerne une fonctionnalité technique de la tranche de réseau. Un paramètre d'une tranche de réseau peut être choisi parmi le débit de la tranche de réseau D, la couverture géographique du service, le nombre de connexion possible, le niveau de sécurité S de la tranche de réseau, la latence L de la tranche de réseau, la qualité de service (« quality of service » en anglais) de la tranche de réseau et la fréquence utilisée par la tranche de réseau.

Selon une autre réalisation, un paramètre peut également concerner une variable liée aux exigences opérationnelles ou de performance propres à l'utilisateur. Un paramètre d'une tranche de réseau peut être choisi parmi divers exigences relatives au service obtenu par l'utilisateur, telles que le coût du service pour l'utilisateur, l'impact énergétique du service, l'impact écologique, l'impact commercial attendu par l'utilisateur.

Ces exemples de paramètres ne sont pas limitatifs. En outre, un paramètre peut être choisi parmi une combinaison ou une fonction des paramètres indiqués ci-dessus ou encore d'autres paramètres non mentionnés. A titre d'exemple, la couverture géographique peut être déterminée par une fonction dépendant d'une pluralité de valeurs liées à la géolocalisation de l'utilisateur.

La valeur d'un paramètre peut avantageusement être modifiée afin de correspondre à l'évolution des besoins de l'utilisateur. A titre d'exemple, l'utilisateur peut souhaiter obtenir un service ayant un coût moindre et avec une couverture géographique moins étendue, auquel cas les valeurs de ces paramètres devront être diminuées.

Toutefois, au niveau du réseau, les paramètres sont reliés entre eux selon des règles prédéterminées, de sorte que la valeur d'un paramètre peut dépendre de la valeur d'un ou plusieurs autres paramètres de la même tranche de réseau. La relation entre les différents paramètres peut ainsi être défini par une fonction d'ajustement F reliant les différents paramètres entre eux, de telle sorte que :

$$F(P_i) = F(P_{i-1}, P_{i-2}, \ldots, P_{i+1}, P_{i+2}, \ldots)$$

Selon une réalisation, la fonction d'ajustement F peut prendre en compte des règles ou restrictions imposées par l'opérateur du réseau (comme des valeurs minimales ou maximales) ou dépendant des caractéristiques de la tranche de réseau afin de limiter les valeurs autorisée des paramètres ou la possibilité de modifier une valeur d'un paramètre, en particulier pour rester compatible avec le service demandé par l'utilisateur.

Selon une autre réalisation, la fonction d'ajustement F peut également prendre en compte des contraintes liées à l'infrastructure physique nécessaire et disponible pour répondre aux caractéristiques de la tranche de réseau.

L'invention vise à obtenir une représentation, encore appelée empreinte visuelle, des paramètres et de la valeur des paramètres de la tranche de réseau au moyen d'une interface graphique. Plus particulièrement, l'interface graphique est configurée pour être animée en fonction de la variation des valeurs des paramètres de la tranche de réseau. L'utilisateur peut ainsi visualiser la représentation afin de connaitre l'état ou l'évolution des paramètres de la tranche de réseau.

On décrit ci-après le procédé de réglage, ou paramétrage, de valeurs de paramètres de la tranche de réseau pour l'animation de l'interface graphique.

Dans une première étape du procédé S1, on acquiert une pluralité de valeurs de paramètres d'entrée d'une tranche de réseau.

Les paramètres d'entrée définissent le service fourni par la tranche de réseau dans un état initial. A titre d'exemple, l'opérateur peut décider de fournir des valeurs de paramètres d'entrée particulièrement élevées en ce qui concerne la sécurité, le nombre de connexion ou la couverture géographique pour une clientèle professionnelle. A l'inverse, les valeurs de ces paramètres d'entrée sont faibles pour un utilisateur souhaitant payer un coût peu élevé pour le service fourni par la tranche de réseau.

Les valeurs des paramètres d'entrée peuvent ainsi être adaptées à un type de service fourni par l'opérateur.

Selon une réalisation, les valeurs de paramètres d'entrée sont proposées par l'opérateur du réseau.

Les valeurs de paramètres d'entrée peuvent ainsi correspondre à un service spécifique. A titre illustratif, pour un service IoT, le nombre de connexion est prédéfini pour correspondre à un nombre élevé afin de pouvoir faire communiquer un grand nombre de terminaux entre eux.

Selon une autre réalisation, les paramètres d'entrée peuvent être définis initialement par l'utilisateur, notamment au début de fonctionnement du service.

Dans une deuxième étape du procédé S2, on associe des coordonnées polaires aux paramètres d'entrée.

Les coordonnées polaires sont réparties dans un référentiel commun. Le référentiel commun est avantageusement un référentiel polaire, comprenant un point central O. On associe plus particulièrement une coordonnée polaire et une coordonnée radiale à chaque paramètre d'entrée. Bien que les coordonnées polaires soient réparties dans un même référentiel, l'échelle associée à chacune des coordonnées radiales peut être différentes, notamment pour prendre en compte la différence d'amplitude relative entre les valeurs de paramètres d'entrée.

La coordonnée angulaire est assignée au paramètre d'entrée et la coordonnée radiale est assignée à la valeur de ce paramètre d'entrée.

La coordonnée radiale d'un paramètre est avantageusement variable entre une valeur minimale $A_{min}$ et une valeur maximale $A_{max}$. La coordonnée radiale associée à un paramètre d'entrée est fonction croissante de la valeur de ce paramètre d'entrée.

Selon une réalisation, la coordonnée radiale peut varier de façon continue entre la valeur minimale $A_{min}$ et la valeur maximale $A_{max}$. En variante, la coordonnée radiale peut varier de façon binaire entre deux valeurs ou entre plusieurs valeurs discrètes. De façon plus générale, la coordonnée radiale d'un paramètre d'entrée peut varier de toute façon continue ou discrète.

La coordonnée angulaire est avantageusement fixe pour chaque paramètre d'entrée. En particulier, la coordonnées polaires d'un paramètres est égale à 360°/N, N étant le nombre de paramètres d'entrée auxquels ont été associés des cordonnées polaires.

Chaque paramètre d'entrée correspond ainsi à une coordonnée polaire différente, les coordonnées polaires étant avantageusement uniformément réparties dans le référentiel polaire.

Selon une réalisation, tous les paramètres d'entrée de la tranche de réseau sont associés à des coordonnées polaires. En variante, seulement certains des paramètres d'entrée de la tranche de réseau sont associés à des coordonnées polaires. Plus généralement le nombre de paramètres d'entrée associés à des coordonnées polaires dépend de la complexité souhaitée de l'interface graphique utilisée, en particulier en fonction des besoins de l'utilisateur. L'interface graphique peut ainsi mettre en œuvre un nombre plus ou moins élevé de paramètres d'entrée L'interface graphique peut également proposer la représentation sélective d'un seul paramètre ou d'un nombre restreint de paramètres, par exemple au moyen de filtres à activer/désactiver sur l'interface graphique.

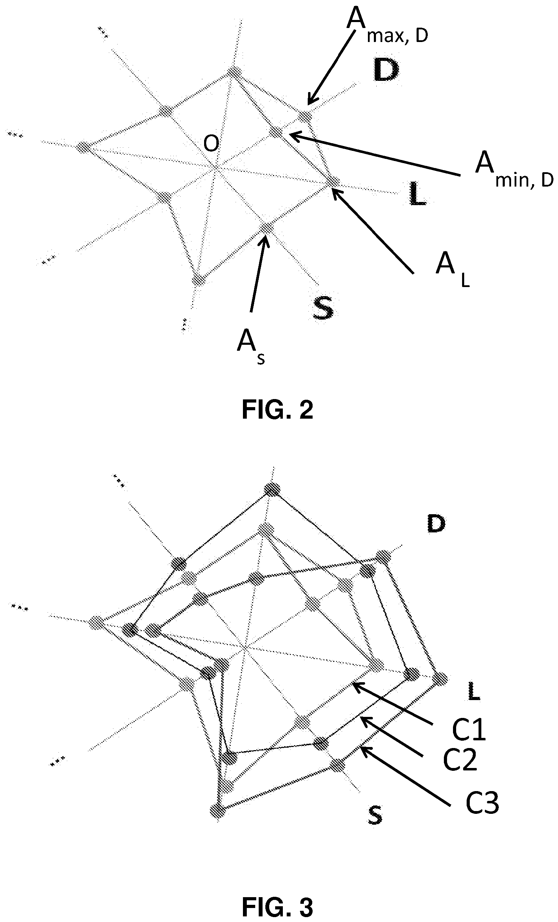

La figure 2 illustre ainsi une représentation dans laquelle on associe des coordonnées polaires à huit paramètres d'entrée d'une tranche de réseau, trois paramètres d'entrée étant identifiés comme le débit D, la latence L ou la sécurité S. Les valeurs des paramètres latence L et sécurité S sont représentées par leurs coordonnées radiales respectives $A_L$ et $A_S$. Les valeurs minimale et maximale du paramètre débit D sont représentées par leurs coordonnées radiales respectives $A_{min,D}$ et $A_{max,D}$.

Comme illustré par la figure 2, il est ainsi possible de déterminer au moyen de l'interface graphique les valeurs des paramètres d'entrée grâce à leur association avec les coordonnées polaires.

Le procédé permet ainsi une représentation visuelle, typiquement en forme d'étoiles ou de toiles d'araignées, des paramètres d'entrée de la tranche de réseau. La représentation comprend N branches, chaque branche correspondant à un paramètre d'entrée. Chaque branche s'étend radialement à partir du point central O du référentiel commun.

Selon une réalisation, l'interface graphique peut également comprendre du texte permettant de préciser d'autres informations utiles à la compréhension de la représentation par l'utilisateur.

Toutefois, les paramètres d'entrée, définissant le service fourni par la tranche de réseau dans l'état initial, sont susceptibles d'évoluer.

En effet, les paramètres de la tranche de réseau peuvent être modifiés du fait de changements inhérents aux capacités réelles de l'infrastructure physique du réseau. En outre, pour diverses raisons, l'utilisateur peut souhaiter lui-même modifier le service dont il bénéficie de la part de la tranche de réseau, en modifiant une ou des valeurs de paramètres associés.

Ainsi, dans une troisième étape du procédé S3, on modifie une valeur d'au moins un premier paramètre d'entrée, et de là, de la coordonnée radiale associée à ce premier paramètre d'entrée.

Selon une réalisation, la modification de la valeur du paramètre d'entrée est réalisée automatiquement.

Par « automatiquement », on entend que l'utilisateur n'a pas besoin de modifier lui-même la valeur du premier paramètre d'entrée de la tranche de réseau. La valeur du premier paramètre d'entrée peut être modifiée pour correspondre à la valeur réelle de ce paramètre, c'est-à-dire la valeur réellement fournie par la tranche de réseau telle que mise en œuvre. La valeur du premier paramètre d'entrée évolue ainsi de façon continue, et avantageusement en temps réel. Par « en temps réel », on entend notamment au cours de l'utilisation du service par l'utilisateur.

Etant donné que la valeur du premier paramètre d'entrée est modifiée automatiquement, la coordonnée radiale associée est également modifiée. L'utilisateur voit ainsi la représentation évoluer en fonction des évolutions de la valeur du premier paramètre d'entrée de la tranche de réseau. On obtient ainsi une empreinte visuelle dynamique.

A titre d'exemple, si la latence L de la tranche de réseau varie, alors la coordonnée radiale associée à ce premier paramètre d'entrée est modifiée au niveau de l'interface graphique pour correspondre à la valeur de latence réelle de la tranche de réseau. Selon le mode de réalisation de la figure 2 l'utilisateur voir alors la coordonnée radiale $A_L$ évoluer en se rapprochant ou en s'éloignant du point central O, la coordonnée angulaire de ce paramètre n'étant avantageusement pas modifiée.

Selon une autre réalisation, la modification de la valeur du premier paramètre d'entrée est réalisée par l'utilisateur lui-même au moyen de l'interface graphique. L'utilisateur peut ainsi visualiser les paramètres d'entrée, notamment leurs coordonnées polaires, et décider de modifier une coordonnée radiale, et de là, la valeur du paramètre d'entrée associé.

A cet effet, une interface homme/machine permet à l'utilisateur d'interagir avec l'interface graphique afin de modifier la coordonnée radiale d'un paramètre d'entrée.

A titre d'exemple, l'utilisateur peut souhaiter modifier le débit D qu'il souhaite obtenir pour le service fourni par la tranche de réseau, et peut donc décider d'ajuster la coordonnée radiale $A_D$ associée au débit D.

Etant donné que les paramètres de la tranche de réseau sont reliés entre eux par la fonction d'ajustement F, la variation d'une coordonnée radiale d'un premier paramètre d'entrée entraine la modification d'une ou plusieurs autres coordonnées radiales, et de là, d'une ou plusieurs valeurs de deuxièmes paramètres d'entrée de la tranche de réseau.

A titre d'exemple, la modification de la coordonnée polaire associée au débit D, peut entrainer la modification de coordonnées polaires associées à la latence L ou à la sécurité S. La figure 3 représente ainsi l'interface graphique de la figure 2 sur laquelle le contour C1 représente les coordonnées polaires des paramètres d'entrée reliés entre eux. Le contour C2 représente les coordonnées polaires de ces paramètres d'entrée après que l'utilisateur ait fait varier la coordonnée radiale associée au débit D, et dans laquelle les valeurs des autres paramètres ont en conséquence également été modifiées.

La représentation des paramètres de la tranche de réseau est ainsi modifiée, notamment en se déformant, traduisant visuellement l'adaptation de la tranche de réseau en fonction de la modification du premier paramètre d'entrée.

On obtient ainsi des valeurs modifiées du premier paramètre d'entrée et des deuxièmes paramètres d'entrée.

Ces valeurs peuvent ensuite être appliquées à la tranche de réseau dans l'état initial en tant que valeurs de paramètres de sortie afin d'obtenir une tranche de réseau dans un état final. Le service fourni par la tranche de réseau dans l'état final est ainsi ajusté pour correspondre aux exigences de l'utilisateur. L'interface graphique permet à l'utilisateur d'obtenir une représentation, encore appelée empreinte visuelle, relative aux paramètres de la tranche de réseau selon ces valeurs de paramètres de sortie.

Selon une réalisation, la représentation peut également afficher des valeurs prédéfinies ou proposées par l'opérateur pour le service de l'utilisateur. Ces valeurs peuvent être associées à des modèles de paramètres de tranche de réseau pour un service donné, ou encore à des valeurs de prédiction en fonction de paramètres de la tranche de réseau ou d'autres paramètres extérieurs. Comme illustré sur la figure 3, le contour C3 représente les coordonnées polaires de valeurs de paramètres proposées par l'opérateur, avantageusement en temps réel.

Les contours C1, C2, C3 forme ainsi ensemble une représentation de type toile d'araignée.

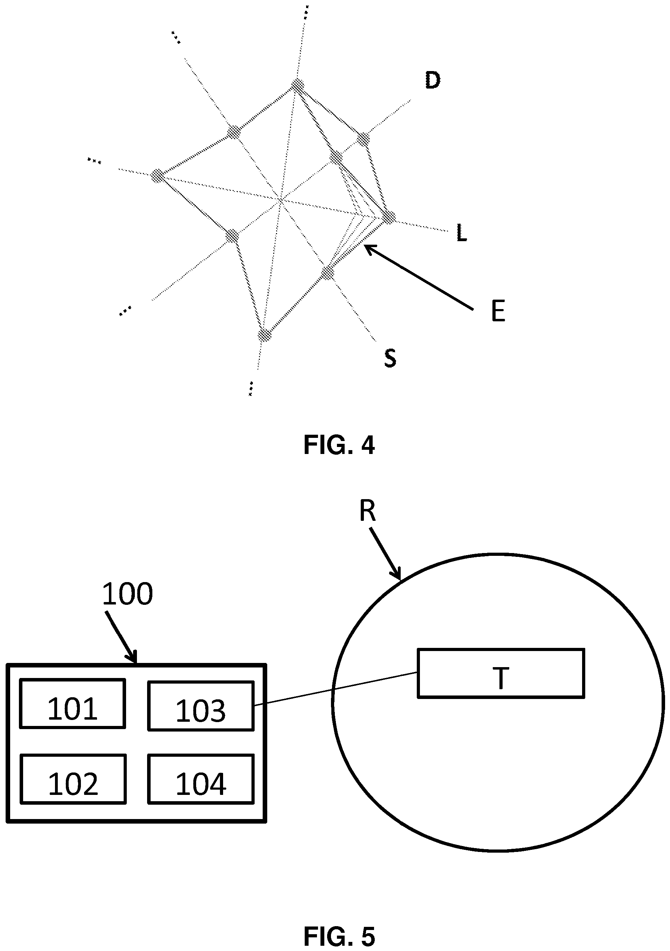

Selon une autre réalisation, la représentation peut montrer le potentiel d'élasticité de la valeur d'un paramètre d'entrée. Par « potentiel d'élasticité », on entend notamment la capacité de variation d'un paramètre en fonction de la modification d'un autre paramètre. En particulier, la figure 4 représente le potentiel d'élasticité E de la valeur de la latence L.

On se réfère maintenant à la figure 5 qui illustre les fonctions d'un terminal utilisateur 100 configuré pour mettre en œuvre les différentes étapes du procédé de réglage de paramètres d'une tranche de réseau selon l'invention.

Un réseau R comprend le paramétrage de la tranche de réseau T associée au service de l'utilisateur.

Le terminal 100 comprend une unité de traitement 101, équipée par exemple d'un processeur, pilotée par un programme d'ordinateur stocké dans une mémoire 102 et mettant en œuvre le procédé de réglage.

L'unité de traitement 101 peut permettre de réaliser un calcul algorithmique prédictif ou d'intelligence artificielle afin d'estimer les valeurs des deuxièmes paramètres d'entrée, tels que décrit ci-dessus.

Le terminal utilisateur 100 comprend en outre un module d'émission/réception 103 à destination/en provenance d'un équipement d'accès associé au paramétrage de la tranche de réseau T. Le module d'émission/réception 103 permet ainsi d'obtenir les valeurs de paramètres de la tranche de réseau, et, une fois certaines valeurs de sortie des paramètres déterminées, de transmettre ces valeurs de sortie à l'équipement d'accès afin d'adapter les valeurs de paramètres de la tranche de réseau T.

Le terminal utilisateur comprend également une interface homme/machine 104 pour permettre à l'utilisateur de visualiser la représentation des paramètres, et le cas échéant, de modifier manuellement la coordonnée radiale d'un paramètre d'entrée.

L'invention n'est pas limitée aux exemples de réalisation ci-dessus décrits et représentés, à partir desquels on pourra prévoir d'autres modes et d'autres formes de réalisation, sans pour autant sortir du cadre de l'invention.

En particulier, l'invention peut également s'appliquer à une représentation temporelle des valeurs de paramètres d'entrée de la tranche de réseau. Selon cette représentation temporelle, il est possible de visualiser l'évolution de la coordonnée radiale associée à chaque paramètre d'entrée en fonction du temps. Une telle représentation temporelle permet ainsi une analyse rétroactive de l'évolution des paramètres afin de permettre à l'utilisateur de mieux maitriser l'évolution du service fourni par la tranche de réseau.

Comme déjà indiqué ci-dessus, l'utilisateur dispose d'une interface graphique et d'une assistance visuelle pour lui permettre de comprendre et de maitriser les dépendances existantes entre les paramètres de la tranche de réseau.

L'utilisateur peut en particulier comparer la représentation de la tranche de réseau dans l'état initial, correspondant aux valeurs de paramètres d'entrée, avec la représentation de la tranche de réseau dans l'état final, correspondant aux valeurs de paramètres de sortie. L'utilisateur peut éventuellement comparer ces représentations avec d'autres représentations correspondant à d'autres valeurs de paramètres, par exemple conseillées par l'opérateur.

Lorsque les paramètres sont modifiés automatiquement, l'utilisateur peut visualiser l'évolution de la représentation, avantageusement en temps réel, afin de comprendre les tendances générales propres à la tranche de réseau.

## Revendications

1. Procédé de réglage de valeurs de paramètres d'un sous-ensemble virtuel d'un réseau (R), dit « tranche de réseau (T) » dans un état initial de fonctionnement, ladite tranche de réseau dans un état initial étant dédiée à un service, le procédé comprenant l'animation d'une interface graphique dans laquelle des coordonnées polaires sont associées à chacun des paramètres de la tranche de réseau dans l'état initial, avec une coordonnée angulaire assignée à un paramètre et une coordonnée radiale assignée à la valeur de ce paramètre, le procédé comprenant au moins les étapes suivantes :

    - acquisition (S1) d'une pluralité de valeurs de paramètres d'entrée d'une tranche de réseau, les paramètres d'entrée définissant le service fourni par la tranche de réseau dans l'état initial de fonctionnement ;
    - répartition (S2) sur l'interface graphique des valeurs de paramètres d'entrée avec une association à chacun des paramètres d'entrée d'une coordonnée angulaire dédiée à ce paramètre d'entrée et d'une coordonnée radiale fonction croissante de la valeur de ce paramètre d'entrée pour former une première empreinte visuelle ; et
- sur modification d'une valeur d'au moins un premier paramètre d'entrée, et ainsi de la modification de la de la coordonnée radiale associée au premier paramètre d'entrée :

    estimation, selon des règles prédéterminées, de valeurs d'un ou plusieurs deuxièmes paramètres d'entrée en fonction de la valeur modifiée du premier paramètre d'entrée,
    modification de coordonnées radiales respectivement associées aux valeurs du ou des deuxièmes paramètres sur l'interface graphique, en fonction des valeurs estimées du ou des deuxièmes paramètres d'entrée pour former une deuxième empreinte visuelle superposée à la première empreinte visuelle, et
    application de la valeur modifiée du premier paramètre d'entrée et des valeurs estimées du ou des deuxièmes paramètres d'entrée en tant que valeurs de paramètres de sortie de la tranche de réseau, les paramètres de sortie définissant le service fourni par la tranche de réseau dans un état final de fonctionnement,
    dans lequel la modification de la valeur du premier paramètre d'entrée est réalisée au moyen d'une interface homme/machine.

2. Procédé selon la revendication 1, dans lequel les paramètres de la tranche de réseau sont choisis parmi le débit, la couverture géographique, le nombre de connexion, le niveau de sécurité, le coût du service, la latence, la qualité de service et la fréquence utilisée par la tranche de réseau.

3. Procédé selon l'une quelconque des revendications précédentes, dans lequel la coordonnée polaire associée à un paramètre est fixe, avantageusement égale à 360°/N, N étant le nombre de paramètres d'entrée auxquels ont été associées des coordonnées polaires.

4. Procédé selon l'une quelconque des revendications précédentes, comprenant une étape de répartition sur l'interface graphique de valeurs de paramètres d'entrée proposées par l'opérateur de la tranche de réseau.

5. Système de réglage de valeurs de paramètres d'un sous-ensemble virtuel d'un réseau (R), dit « tranche de réseau (T) », dédié à un service, comprenant :

- au moins un terminal utilisateur (100) configuré pour mettre en œuvre le procédé de réglage selon l'une quelconque des revendications 1 à 4 ; et

- au moins un équipement d'accès associé au paramétrage de la tranche de réseau (T) configuré pour communiquer avec le terminal utilisateur (100).

6. Terminal utilisateur (100) d'un système de réglage selon la revendication 5, comprenant une interface homme/machine (104) configurée pour permettre une modification de la valeur du premier paramètre d'entrée.

7. Programme comprenant des instructions de code de programme pour l'exécution des étapes du procédé de réglage selon l'une quelconque des revendications 1 à 4.

8. Support d'enregistrement lisible par un terminal sur lequel les instructions de code d'un programme d'ordinateur selon la revendication 7 sont stockées.

**Patentansprüche**

1. Verfahren zum Einstellen von Werten von Parametern einer virtuellen Teilmenge eines Netzwerks (R), "Netzwerk-Slice" (T) genannt, in einem Ausgangsbetriebszustand, wobei der Netzwerk-Slice in einem für einen Dienst vorgesehenen Ausgangszustand ist, wobei das Verfahren die Animation einer grafischen Schnittstelle umfasst, in der polare Koordinaten jedem der Parameter des Netzwerk-Slice in dem Ausgangszustand zugeordnet sind, wobei eine Winkelkoordinate einem Parameter zugewiesen ist und eine radiale Koordinate dem Wert dieses Parameters zugewiesen ist, wobei das Verfahren mindestens die folgenden Schritte umfasst:

- Erfassen (S1) einer Vielzahl von Werten von Eingangsparametern eines Netzwerk-Slice, wobei die Eingangsparameter den von dem Netzwerk-Slice in dem Ausgangsbetriebszustand bereitgestellten Dienst definieren;
- Verteilen (S2), auf der grafischen Schnittstelle, der Werte von Eingangsparametern mit einer Zuordnung zu jedem der Eingangsparameter einer Winkelkoordinate, die für diesen Eingangsparameter vorgesehen ist, und einer radialen Koordinate, die eine steigende Funktion des Werts dieses Eingangsparameters ist, um einen ersten visuellen Eindruck zu bilden; und
- bei Änderung eines Werts mindestens eines ersten Eingangsparameters und somit der Änderung der radialen Koordinate, die dem ersten Eingangsparameter zugeordnet ist:

Schätzen, nach vorbestimmten Regeln, von Werten von einem oder mehreren zweiten Eingangsparametern in Abhängigkeit von dem geänderten Wert des ersten Eingangsparameters, Ändern von radialen Koordinaten, die jeweils den Werten des oder der zweiten Parameter auf der grafischen Schnittstelle zugeordnet sind, in Abhängigkeit von den geschätzten Werten des oder der zweiten Eingangsparameter, um einen zweiten visuellen Eindruck zu bilden, der dem ersten visuellen Eindruck überlagert ist, und

Anwenden des geänderten Werts des ersten Eingangsparameers und der geschätzten Werte des oder der zweiten Eingangsparameter als Werte von Ausgangsparametern des Netzwerk-Slice, wobei die Ausgangsparameter den von dem Netzwerk-Slice in einem Endbetriebszustand bereitgestellten Dienst definieren, wobei das Ändern des Werts des ersten Eingangsparameters mittels einer Mensch/Maschine-Schnittstelle ausgeführt wird.

2. Verfahren nach Anspruch 1, wobei die Parameter des Netzwerk-Slice unter der Übertragungsrate, der geografischen Abdeckung, der Anzahl von Verbindungen, dem Sicherheitsniveau, den Kosten des Dienstes, der Latenz, der Dienstgüte und der von dem Netzwerk-Slice verwendeten Frequenz ausgewählt sind.

3. Verfahren nach einem der vorhergehenden Ansprüche, wobei die einem Parameter zugeordnete polare Koordinate feststeht, vorteilhafterweise gleich 360°/N ist, wobei N die Anzahl von Eingangsparametern ist, denen polare Koordinaten zugewiesen worden sind.

4. Verfahren nach einem der vorhergehenden Ansprüche, umfassend einen Schritt des Verteilens, auf der grafischen Schnittstelle, von Werten von Eingangsparametern, die von dem Betreiber des Netzwerk-Slice vorgeschlagen werden.

5. System zum Einstellen von Werten von Parametern einer virtuellen Teilmenge eines Netzwerks (R), "Netzwerk-Slice" (T) genannt, die für einen Dienst vorgesehen ist, umfassend:

- mindestens ein Benutzerendgerät (100), das dazu ausgestaltet ist, das Verfahren zum Einstellen nach einem der Ansprüche 1 bis 4 zu implementieren; und
- mindestens eine der Parametrierung des Netzwerk-Slice (T) zugeordnete Zugangseinrichtung, die dazu ausgestaltet ist, mit dem Benutzerendgerät (100) zu kommunizieren.

6. Benutzerendgerät (100) eines Systems zum Einstellen nach Anspruch 5, umfassend eine Mensch/Maschine-Schnittstelle (104), die dazu ausgestaltet ist, eine Änderung des Werts des ersten Eingangsparameters zu ermöglichen.

7. Programm, das Programmcodeanweisungen zur Ausführung der Schritte des Verfahrens zum Einstellen nach einem der Ansprüche 1 bis 4 umfasst.

8. Von einem Endgerät lesbares Speichermedium, auf dem die Codeanweisungen eines Computerprogramms nach Anspruch 7 gespeichert sind.

**Claims**

1. Method for adjusting values of parameters for a virtual sub-set of a network (R), called the "network slice (T)" in an initial operating state, said network slice in an initial state being dedicated to a service, the method comprising animating a graphical interface in which polar coordinates are associated with each of the parameters of the network slice in the initial state, with an angular coordinate being assigned to a parameter and a radial coordinate being assigned to the value of this parameter, the method comprising at least the following steps:

   - acquiring (S1) a plurality of input parameter values for a network slice, the input parameters defining the service provided by the network slice in the initial operating state;
   - distributing (S2) on the graphical interface the input parameter values with association to each of the input parameters of an angular coordinate dedicated to this input parameter and a radial coordinate, which is an increasing function of the value of this input parameter, so as to form a first visual fingerprint; and
   - on change of a value of at least a first input parameter, and with that, on change of the radial coordinate associated with the first input parameter:

      estimating, based on predetermined rules, values of one or more second input parameters depending on the changed value of the first input parameter,
      changing radial coordinates respectively associated with the values of the one or more second parameters on the graphical interface, depending on the estimated values of the one or more second input parameters so as to form a second visual fingerprint superposed on the first visual fingerprint, and
applying the changed value of the first input parameter and the estimated values of the one or more second input parameters as output parameter values of the network slice, the output parameters defining the service provided by the network slice in a final operating state, wherein the change of the value of the first input parameter is carried out by means of a human-machine interface.

2. Method according to Claim 1, wherein the parameters of the network slice are selected from throughput, geographic coverage, number of connections, security level, cost of service, latency, quality of service, and frequency used by the network slice.

3. Method according to any of the preceding claims, wherein the polar coordinate associated with a parameter is set, and advantageously equal to 360°/N, N being the number of input parameters with which polar coordinates have been associated.

4. Method according to any of the preceding claims, comprising a step of distributing over the graphical interface input parameter values proposed by the operator of the network slice.

5. System for adjusting values of parameters of a virtual sub-set of a network (R), called the "network slice (T)", dedicated to a service, comprising:

   - at least one user terminal (100) configured to implement the adjusting method according to any of Claims 1 to 4; and
   - at least one access equipment associated with parameterization of the network slice (T), said equipment being configured to communicate with the user terminal (100).

6. User terminal (100) of an adjusting system according to Claim 5, comprising a human-machine interface (104) configured to allow a change of the value of the first input parameter.

7. Program comprising program code instructions for executing the steps of the adjusting method according to any of Claims 1 to 4.

8. Recording medium readable by a terminal, on which the code instructions of a computer program according to Claim 7 are stored.

**FIG. 1**

**FIG. 2**

**FIG. 3**

D

L

E

S

**FIG. 4**

R

100

101

103

102

104

T

**FIG. 5**

**RÉFÉRENCES CITÉES DANS LA DESCRIPTION**

**Documents brevets cités dans la description**

- WO 2017143047 A1

**Littérature non-brevet citée dans la description**

- Network Slicing for Personalized 5G Mobile Tele-communications. *IEEE Communications Magazine*, May 2017

- *An Introduction to Network Slicing*, 17 November 2017, 1-20